# EUROPEAN PATENT SPECIFICATION

(11) **EP 2 582 934 B1**
(45) Date of publication and mention of the grant of the patent: **23.05.2018**
(21) Application number: 11798464.1
(22) Date of filing: 20.06.2011
(51) Int. Cl.: F01N 3/025, F01N 3/36, F01N 9/00, F01N 11/00

(54) **METHOD AND DEVICE PERTAINING TO COOLING OF DOSING UNITS OF HC DOSING SYSTEMS FOR EXHAUST CLEANING**
VERFAHREN UND VORRICHTUNG ZUR KÜHLUNG VON DOSIEREINHEITEN VON HC-DOSIERSYSTEMEN ZUR ABGASREINIGUNG
PROCÉDÉ ET DISPOSITIF EN RAPPORT AVEC LE REFROIDISSEMENT D'UNITÉS DE DOSAGE DE SYSTÈMES DE DOSAGE D'HYDROCARBURES POUR LE NETTOYAGE DE L'ÉCHAPPEMENT

(30) Priority: 21.06.2010 SE 1050644
(43) Date of publication of application: 24.04.2013
(73) Proprietor: Scania CV AB (publ), 151 87 Södertälje (SE)
(72) Inventor: LILJESTRAND, Andreas, S-151 45 Södertälje (SE); BREMBERG, Per, S-151 60 Södertälje (SE); CARLSSON, Ulf, S-152 30 Södertälje (SE); ERIKSSON, Lars, S-153 38 Järna (SE)
(74) Representative: Scania CV AB
(86) International application number: PCT/SE2011/050792
(87) International publication number: WO 2011/162694

(56) References cited:
- WO-A2-2009/053806
- WO-A2-2009/053806
- DE-A1-102007 000 666
- DE-A1-102007 000 666
- DE-A1-102007 039 794
- DE-A1-102007 039 794
- FR-A1- 2 839 743

## Description

### TECHNICAL FIELD

The present invention relates to a method for cooling a dosing unit pertaining to an HC (hydrocarbon) dosing system for exhaust cleaning which comprises the dosing unit for fuel and a feed device to supply said fuel for cooling. The invention relates also to a computer programme product containing programme code for a computer for implementing a method according to the invention. The invention relates also to an HC dosing system for exhaust cleaning which comprises a dosing unit for fuel and a feed device to supply said fuel for cooling, and a motor vehicle which is equipped with the HC dosing system.

### BACKGROUND

In vehicles today, diesel fuel is used as fuel in DPF (diesel particulate filter) systems which comprise a particle filter. The particle filter is adapted to capturing, for example, diesel particles and soot. During active regeneration of the particle filter, diesel fuel is supplied to an exhaust pipe downstream of an engine and is led into an oxidation catalyst, also called DOC. In the oxidation catalyst, said diesel fuel is burnt and causes a rise in the temperature of the exhaust system. Active regeneration of the particle filter situated downstream of the oxidation catalyst can thus be effected.

One type of DPF system comprises a container for diesel fuel. The DPF system may also have a pump adapted to drawing said diesel fuel from the container via a suction hose and to supplying it via a pressure hose to a dosing unit situated adjacent to an exhaust system of the vehicle, e.g. adjacent to an exhaust pipe of the exhaust system. The dosing unit is adapted to injecting a necessary amount of diesel fuel into the exhaust pipe upstream of the particle filter according to operating routines stored in a control unit of the vehicle. To make it easier to regulate the pressure when no or only small amounts are being dosed, the system also comprises a return hose which runs back from a pressure side of the system to the container. This configuration makes it possible to cool the dosing unit by means of said diesel fuel which, during cooling, flows from the container via the pump and the dosing unit and back to the container. This results in active cooling of the dosing unit. The return flow from the dosing valve to the container is currently substantially constant.

An HC dosing system is for example disclosed in WO2009/053806A2, whereas similar reducing agent injection system are known from DE102007000666A1 or FR2839743. As the dosing unit is currently situated adjacent to the vehicle's exhaust system which becomes warm during operation of the vehicle, e.g. depending on the engine's load, there is risk of the dosing valve becoming overheated. Overheating of the dosing unit may entail degradation of its functionality, potentially impairing its performance.

The dosing unit currently comprises electrical components, certain of them being provided with a circuit card. Said circuit card may for example be adapted to controlling the dosing of diesel fuel to the vehicle's exhaust system. For various reasons, these electrical components are sensitive to high temperatures. Too high temperatures of the dosing unit may result in degradation of the electrical components, potentially leading to expensive repairs at a service workshop. Moreover, diesel fuel present in the dosing unit may at least partly convert to solid form at too high temperatures, potentially leading to obstruction of the dosing unit. According to an example, said diesel fuel undergoes pyrolysis in the dosing unit and is thereby at least partly converted to coke. Thus at least part of said diesel fuel may carbonise. It is therefore of the utmost importance that the temperature of the dosing unit of the DPF system should not exceed a critical level.

Cooling the dosing unit of a vehicle's DPF system is currently effected continuously during the vehicle's ordinary operation as a result of said diesel fuel circulating within the DPF system as indicated above. To some extent, cooling the dosing unit during operation of the vehicle currently works satisfactorily. There is however always a need to improve the performance of vehicles' existing subsystems, e.g. DPF systems, not least from a competition perspective.

During and after operation of the vehicle a large amount of thermal energy caused by its operation is stored in primarily the exhaust system. This thermal energy may be led to the dosing unit from, for example, a silencer and the particle filter and may warm the dosing unit to a temperature which exceeds a critical value.

When the vehicle is switched off and the exhaust flow in the exhaust system consequently ceases, the diesel fuel dosing unit is cooled for a predetermined time, e.g. about 30 minutes, by said diesel fuel in the same way as during ordinary operation.

This arrangement entails certain disadvantages. One is the relatively large amount of energy used to power the pump in the DPF system after the vehicle has been switched off. Any vehicle battery used to power the pump of the DPF system may thus be discharged or reach a relatively low charge level.

Another disadvantage of the dosing unit being cooled in the same way as during ordinary operation is that the pump of the DPF system emits disturbing noise which for example a driver of the vehicle may find irritating, particularly when he/she has to sleep in the cab after a driving run or is in the immediate vicinity of the vehicle.

There is thus a need to improve current methods for cooling the dosing unit in DPF systems, in order to reduce or eliminate the above disadvantages.

### SUMMARY OF THE INVENTION

An object of the present invention is to propose a novel and advantageous method for improving the performance of an HC dosing system.

Another object of the present invention is to propose a novel and advantageous HC dosing system and a novel and advantageous computer programme for improving the performance of an HC dosing system.

Another object of the present invention is to propose a novel and advantageous method for effecting cooling of a dosing unit of an HC dosing system after cessation of an exhaust flow therein.

Another object of the invention is to propose a novel and advantageous HC dosing system and a novel and advantageous computer programme for effecting cooling of a dosing unit of an HC dosing system after cessation of an exhaust flow in the HC dosing system.

A further object is to propose a method, an HC dosing system and a computer programme for reducing the risk that a dosing unit in an HC dosing system might become overheated after cessation of an exhaust flow in the HC dosing system.

A further object is to propose an alternative method, an alternative HC dosing system and an alternative computer programme for reducing the risk that a dosing unit in an HC dosing system might become overheated after cessation of an exhaust flow in the HC dosing system.

These objects are achieved with a method for cooling a dosing unit pertaining to HC dosing systems for exhaust cleaning which comprise the dosing unit for fuel and a feed device to supply said fuel for cooling, according to claim 1. An aspect of the invention proposes a method for cooling a dosing unit pertaining to HC dosing systems for exhaust cleaning which comprise the dosing unit for fuel and a feed device to supply said fuel for cooling, comprising the steps of cooling said fuel dosing unit by means of fuel supplied to it, and of intermittently, in mutually successive periods of running at certain operating powers and of zero operating power, running said fuel feed device at reduced power compared with ordinary operation. Intermittently running the feed device for said fuel results in a functionality of the HC dosing system which reduces or minimises the impact of the HC dosing system. The feed device may be run intermittently at an operating power which achieves desirable cooling of the dosing unit. The feed device is run intermittently at reduced power compared with ordinary operation.

The feed device may be run intermittently with a predetermined interval configuration. This predetermined interval configuration may be defined as operation of the feed device being deactivated at certain periodicities and being subsequently reactivated.

This sequence of temporary deactivation and reactivation may be repeated until the dosing unit of the HC dosing system has reached a predetermined desirable temperature, e.g. 40 degrees Celsius.

This predetermined interval configuration may comprise catering for rewarming effects of said dosing unit. As the dosing unit according to certain versions is fitted adjacent to an exhaust system which comprises for example a particle filter and other components which may transfer stored thermal energy to the dosing unit, even after the latter has been cooled to a desirable temperature, it is advantageous to cater for these rewarming effects when determining said interval configuration.

Operation of the feed device may be activated on the basis of a measured temperature of at least one portion of said HC dosing system.

Operation of the feed device may result in cooling of said dosing unit to a temperature which is below a predetermined limit value.

Said fuel may be diesel fuel or some other hydrocarbon-based fuel.

To minimise the impact upon the vehicle, a proposed function causes operation of the pump of the feed device of the HC dosing system to be deactivated and reactivated any desired number of times during cooling of the dosing unit after the cessation of said exhaust flow. According to a version, the pump speed is lower or substantially lower than that employed during ordinary operation of the HC dosing system, which ordinary operation comprises operation of the HC dosing system when the vehicle is in motion, or previous ordinary operation of the HC dosing system during cooling of the dosing unit after the cessation of said exhaust flow.

With advantage, a previous need for electrical energy from a battery of the vehicle when its engine is off during the subsequent cooling procedure is reduced.

Maintaining intermittent operating power of the feed device with substantially unchanged cooling power of the dosing unit results in less noise than running the feed device at full power as previously. Part of the inventiveness of the present invention is that it has been found that the cooling power of the dosing unit is reduced only marginally when the feed device is run intermittently.

Applying reduced operating power of the feed device with substantially unchanged cooling power of the dosing unit results in less noise than running the feed device at full power as previously.

Despite the operating power of the feed device being reduced compared with ordinary operation and its being run intermittently, with substantially unchanged cooling power of the dosing unit, it is possible to avoid the fuel becoming carbonised by too high temperatures and thereby causing obstruction of the dosing unit, which might entail expensive repairs of the HC dosing system.

By reducing the operating power of the feed device with substantially unchanged cooling power of the dosing unit, temperature-related damage to the dosing unit's electrical components may with advantage be prevented.

Despite the feed device being run intermittently, with substantially unchanged cooling power of the dosing unit, temperature-related damage to the dosing unit's electrical components may with advantage be prevented.

Reducing the operating power of the feed device may entail running it at a lower speed than during ordinary operation. Reducing the power of the feed device may result in a lower pressure of the fuel towards the dosing unit than during ordinary operation.

According to an embodiment, the power of the fuel feed device is reduced in at least one stage to a level which results in substantially no change in the cooling power of the dosing unit but uses substantially less energy than in the state of the art.

The method may comprise the step of intermittently running said feed device at least possible power, with substantially unchanged cooling power of said dosing unit, for as long as cooling continues. With advantage, a cooling function is effected whereby the cooling power of said dosing unit is substantially unchanged but the impact of the HC dosing system is decreased in a desirable way.

The step of running said feed device may comprise running it at a power corresponding to 10-30% of that during ordinary operation. With advantage, this results in a substantially reduction in the amount of energy required for adequate cooling of the dosing unit of the HC dosing system, particularly since the feed device is also run intermittently. According to a preferred embodiment, the step of running said feed device may comprise running it at a power corresponding to less than 10% of that during ordinary operation. According to an embodiment, the innovative method may result in a total energy saving of 10-50% compared with cooling methods according to the state of the art.

The method may further comprise the step of running said feed device on the basis of a measured temperature of at least one portion of said HC dosing system. Any adequate temperature of said at least one portion of said HC dosing system may be used such that cooling of the dosing unit can be switched off automatically when said temperature of the at least one portion of said HC dosing system has been reached after cessation of the exhaust flow.

Running said feed device may entail catering for rewarming effects. Said predetermined period of time and said adequate temperature of the at least one portion of said HC dosing system may be predetermined by a computer model stored in a control unit of the vehicle on the basis of already known rewarming effects of the HC dosing system. The rewarming effects may be determined on the basis of predicted energy storage in the HC dosing system.

The feed device of the method may comprise a feed device adapted to supplying fuel to an injection system of an engine. This makes it possible for an existing feed device of the vehicle to be utilised for a new purpose. Alternatively, a separate feed device may be employed.

The method may comprise the step of powering said dosing unit by means of a compressed air source.

The method may comprise the step of cooling said fuel dosing unit by means of fuel after cessation of an exhaust flow.

The method is easy to implement in existing motor vehicles. Software pertaining to an HC dosing system for exhaust cleaning according to the invention may be installed in a control unit of the vehicle during the manufacture of the vehicle. A purchaser of the vehicle may thus have the possibility of selecting the function of the method as an option. Alternatively, software which comprises programme code for applying the innovative method pertaining to an HC dosing system for exhaust cleaning may be installed in a control unit of the vehicle on the occasion of upgrading at a service station, in which case the software may be loaded into a memory in the control unit. Implementing the innovative method is therefore cost-effective, particularly since the vehicle need not be provided with any further components or subsystems. Relevant hardware is currently already provided in the vehicle. The invention therefore represents a cost-effective solution to the problems indicated above.

Software comprising programme code for the cooling a fuel dosing unit by means of fuel supplied to the dosing unit, and for intermittently running a feed device for said fuel at reduced power compared with ordinary operation, according to an aspect of the invention, is easy to update or replace. Various parts of the software comprising programme code for applying the innovative method may also be replaced independently of one another. This modular configuration is advantageous from a maintenance perspective.

An aspect of the invention proposes an HC dosing system for exhaust cleaning which comprises a coolable dosing unit for fuel and a feed device to supply said fuel, comprising means for cooling a fuel dosing unit by means of fuel intended to be supplied to it, and means for intermittently, in mutually successive periods of running at certain operating powers and of zero operating power, running said feed device to supply said coolant fuel at reduced power compared with ordinary operation.

The feed device is adapted to being run at reduced power compared with ordinary operation.

The feed device may adapted to being run intermittently with a predetermined interval configuration.

Said predetermined interval configuration may entail catering for rewarming effects of said dosing unit.

The feed device may be adapted to being activated on the basis of a measured temperature of at least one portion of said HC dosing system. The feed device may be adapted to effecting, during operation, cooling of said dosing unit to a temperature which is below a predetermined limit value. The feed device of the method may comprise a feed device adapted to supplying fuel to an injection system of an engine. This makes it possible for an existing feed device of the vehicle to be utilised for a new purpose. Alternatively, a separate feed device may be used.

The HC dosing system may comprise compressed air means adapted to powering said dosing unit.

The HC dosing system may comprise means for cooling said fuel dosing unit by means of fuel after cessation of an exhaust flow.

Said HC dosing system may comprise a DPF system.

The above objects are also achieved with a motor vehicle which comprises an HC dosing system. The vehicle may be a truck, bus or passenger car.

An aspect of the invention proposes any suitable platform which comprises an HC dosing system, e.g. a watercraft. The watercraft may be of any kind, e.g. a motorboat, a steamer, a ferry or a ship.

An aspect of the invention proposes a computer programme for cooling a dosing unit pertaining to HC dosing systems for exhaust cleaning which comprise the dosing unit for fuel and a feed device to supply said fuel for cooling, which programme contains programme code for causing an electronic control unit or another computer connected to the electronic control unit to perform steps according to any of claims 1-9.

An aspect of the invention proposes a computer programme for cooling a dosing unit pertaining to HC dosing systems for exhaust cleaning which comprise the dosing unit for fuel and a feed device to supply said fuel for cooling, which programme contains programme code stored on a computer-readable medium for causing an electronic control unit or another computer connected to the electronic control unit to perform steps according to any of claims 1-9.

An aspect of the invention proposes a computer programme product containing a programme code stored on a computer-readable medium for performing method steps according to any of claims 1-9 when said programme is run on an electronic control unit or another computer connected to the electronic control unit.

Further objects, advantages and novel features of the present invention will become apparent to one skilled in the art from the following details, and also by putting the invention into practice. Whereas the invention is described below, it should be noted that it is not restricted to the specific details described. Specialists having access to the teachings herein will recognise further applications, modifications and incorporations within other fields, which are within the scope of the invention.

### BRIEF DESCRIPTION OF THE DRAWINGS

For fuller understanding of the present invention and further objects and advantages of it, the detailed description set out below should be read together with the accompanying drawings, in which the same reference notations denote similar items in the various diagrams, and in which:
Figure 1 illustrates schematically a vehicle according to an embodiment of the invention;
Figure 2 illustrates schematically a subsystem for the vehicle depicted in Figure 1, according to an embodiment of the invention;
Figure 3a is a schematic diagram of operating power of a feed device as a function of time, according to an embodiment of the invention;
Figure 3b is a schematic diagram of operating power of a feed device as a function of time, according to an embodiment of the invention;
Figure 4a is a schematic flowchart of a method according to an embodiment of the invention;
Figure 4b is a more detailed schematic flowchart of a method according to an embodiment of the invention; and
Figure 5 illustrates schematically a computer according to an embodiment of the invention.

### DETAILED DESCRIPTION OF THE DRAWINGS

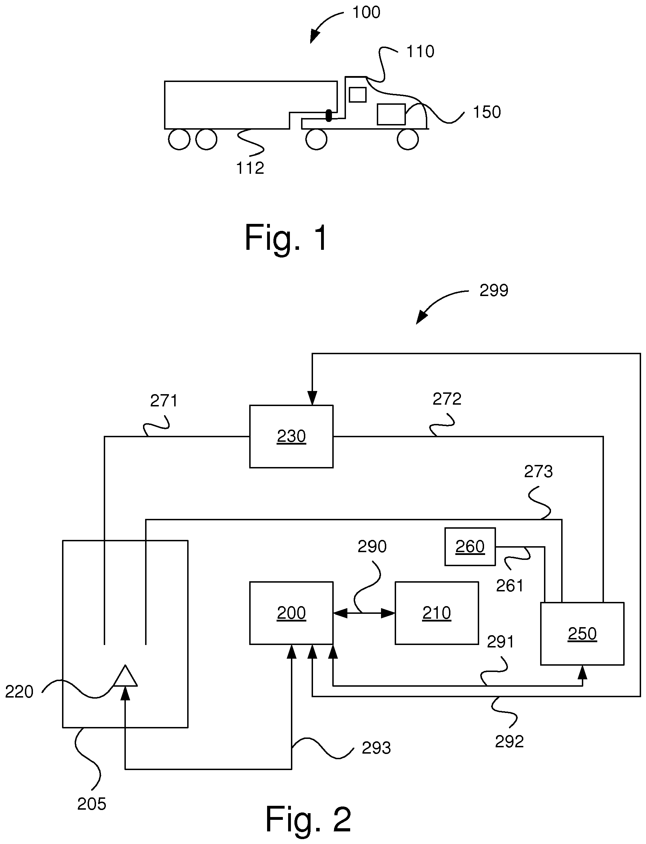

Figure 1 depicts a side view of a vehicle 100. The exemplified vehicle 100 comprises a tractor unit 110 with an engine 150 and a trailer 112. The vehicle may be a heavy vehicle, e.g. a truck or a bus. The vehicle may alternatively be a passenger car.

It should be noted that the invention is applicable to any suitable HC dosing system and is therefore not restricted to DPF systems of motor vehicles. The innovative method and the innovative HC dosing system according to an aspect of the invention are well suited to other platforms which have an HC dosing system than motor vehicles, e.g. watercraft. The watercraft may be of any kind, e.g. motorboats, steamers, ferries or ships.

The innovative method and the innovative HC dosing system according to an aspect of the invention are also well suited to for example, systems which comprise industrial engines and/or engine-powered industrial robots.

The innovative method and the innovative HC dosing system according to an aspect of the invention are also well suited to various kinds of power plants, e.g. an electric power plant comprising a diesel generator.

The innovative method and the innovative HC dosing system are well suited to any engine system which comprises an engine and an HC dosing system, e.g. on a locomotive or some other platform.

The innovative method and the innovative HC dosing system are well suited to any system which comprises a particle generator (e.g. a combustion engine) and an HC dosing system.

The innovative method and the innovative HC dosing system are well suited to any system which comprises any kind of system which generates exhaust gases with particles and a filter which stores particles, which particles are burnt during regeneration of said filter, particularly during active regeneration of said filter.

The term "link" refers herein to a communication link which may be a physical connection such as an opto-electronic communication line, or a non-physical connection such as a wireless connection, e.g. a radio link or microwave link.

The term "line" refers herein to a passage for holding and conveying a fluid, e.g. a fuel in liquid form. The line may be a pipe of any suitable size. The line may be made of any suitable material, e.g. plastic, rubber or metal.

The term "fuel" refers herein to an agent used for active regeneration of a particle filter of an HC dosing system. Said fuel according to a version is diesel fuel. Other kinds of hydrocarbon-based fuels may of course be used. Diesel fuel is herein cited as an example of a fuel, but one skilled in the art will appreciate that the innovative method and the innovative HC device are feasible for other types of fuels, e.g. synthetic fuels, subject to necessary adaptations, e.g. adaptations to adequate carbonisation temperatures for fuels adopted, in control algorithms for executing software code in accordance with the innovative method.

Although the term "HC dosing system" is used herein to denote a particle filter system, the invention is not restricted to use of a diesel particle filter. On the contrary, other types of particle filter may be used according to the invention. One skilled in the art will appreciate which kind of fuel is most suitable for regenerating the particle filter adopted.

Figure 2 depicts a subsystem 299 of the vehicle 100. The subsystem 299 is situated in the tractor unit 110. The subsystem 299 may form part of an HC dosing system. The subsystem 299 consists according to this example of a container 205 adapted to containing a fuel. The container 205 is adapted to containing a suitable amount of fuel and to being replenishable as necessary. The container may accommodate, for example, 200 or 1500 litres of fuel.

A first line 271 is adapted to leading the fuel to a pump 230 from the container 205. The pump 230 may be any suitable pump. The pump 230 may be a diaphragm pump provided with at least one filter. The pump 230 is adapted to being driven by an electric motor. The pump 230 is adapted to drawing the fuel from the container 205 via the first line 271 and supplying it via a second line 272 to a dosing unit 250. The dosing unit 250 comprises an electrically controlled dosing valve by means of which a flow of fuel added to the exhaust system can be controlled. The pump 230 is adapted to pressurising the fuel in the second line 272. The dosing unit 250 is provided with a throttle unit against which said pressure of the fuel is built up in the subsystem 299.

The dosing unit 250 is adapted to supplying said fuel to an exhaust system (not depicted) of the vehicle 100. More specifically, the dosing unit 250 is adapted to supplying a suitable amount of fuel in a controlled way to an exhaust system of the vehicle 100. According to this version, a particle filter (not depicted), e.g. a DPF, is situated downstream of a location in the exhaust system where supply of fuel is effected. The amount of fuel supplied in the exhaust system is intended to be used in a conventional way in the HC dosing system for active regeneration of the particle filter.

The dosing unit 250 is situated adjacent to, for example, an exhaust pipe which is adapted to leading exhaust gases from the combustion engine 150 of the vehicle 100 to said particle filter. The dosing unit 250 is situated in thermal contact with the exhaust system of the vehicle 100. This means that thermal energy stored in, for example, an exhaust pipe, silencer, particle filter and SCR catalyst can thus be led to the dosing unit 250.

The dosing unit 250 is provided with an electronic control card which is adapted to handling communication with the control unit 200. The dosing unit 250 comprises also plastic and/or rubber components which might melt or be otherwise adversely affected as a result of too high temperatures.

The dosing unit 250 is sensitive to temperatures above a certain value, e.g. 120 degrees Celsius. As for example the exhaust pipe, the silencer and the particle filter of the vehicle 100 exceed this temperature value, there is risk that the dosing unit 250 might become overheated during or after operation of the vehicle if not provided with cooling.

A third line 273 runs between the dosing unit 250 and the container 205. The third line 273 is adapted to leading back to the container 205 a certain amount of the fuel fed to the dosing valve 250. This configuration achieves with advantage cooling of the dosing unit 250. The dosing unit 250 is thus cooled by a flow of the fuel when it is pumped through the dosing unit 250 from the pump 230 to the container 205.

The first control unit 200 is arranged for communication with a temperature sensor 220 via a link 293. The temperature sensor 220 is adapted to detecting a prevailing temperature of the fuel where the sensor is fitted. According to this version, the temperature sensor 220 is situated in the container 205. The temperature sensor 220 is adapted to continuously sending signals to the first control unit 200 which contain information about a prevailing temperature of the fuel.

According to an alternative, the temperature sensor 220 is situated adjacent to the dosing unit 250 in order to detect a prevailing temperature there. According to another version, the temperature sensor 220 is situated adjacent to the particle filter of the HC dosing system in order to detect a prevailing temperature there. Any desired number of temperature sensors may be provided in the subsystem 299 to detect a prevailing temperature adjacent thereto. The temperature sensor/sensors 220 is/are adapted to detecting at a suitable location within the subsystem 299 a prevailing temperature which may serve as a basis for controlling operation of the pump 230 in order to cool the dosing unit by means of said flow of fuel.

The first control unit 200 is arranged for communication with the pump 230 via a link 292. The first control unit 200 is adapted to controlling operation of the pump 230 in order for example to regulate the fuel flows within the subsystem 299.

The first control unit 200 is arranged for communication with the dosing unit 250 via a link 291. The first control unit 200 is adapted to controlling operation of the dosing unit 250 in order for example to regulate fuel supply to the exhaust system of the vehicle 100. The first control unit 200 is adapted to controlling operation of the dosing unit 250 in order for example to regulate fuel return supply to the container 205.

The first control unit 200 is adapted, according to a version, to using the signals received which contain a prevailing temperature of the fuel in the region of the temperature sensor 220 and/or a prevailing temperature of any desired component of the HC dosing system, e.g. the dosing unit, or the subsystem 299 as a basis for controlling the pump 230 in accordance with an aspect of the innovative method. In particular, the first control unit 200 is adapted, according to a version, to using the signals received which contain a prevailing temperature of the fuel in the region of the temperature sensor 220 and/or a prevailing temperature of any desired component of the HC dosing system or the subsystem 299 as a basis for controlling operation of the pump 230 intermittently and at reduced power compared with ordinary operation, in accordance with an aspect of the innovative method.

A second control unit 210 is arranged for communication with the first control unit 200 via a link 290. The second control unit 210 may be detachably connected to the first control unit 200. The second control unit 210 may be a control unit external to the vehicle 100. The second control unit 210 may be adapted to performing the innovative method steps according to the invention. The second control unit 210 may be used to cross-load software to the first control unit 200, particularly software for applying the innovative method. The second control unit 210 may alternatively be arranged for communication with the first control unit 200 via an internal network in the vehicle. The second control unit 210 may be adapted to performing substantially similar functions to those of the first control unit 200, e.g. using the signals received which contain a prevailing temperature of the fuel in the region of the temperature sensor 220 and/or a prevailing temperature of any desired component of the HC dosing system or the subsystem 299 as a basis for controlling operation of the pump 230 intermittently and at reduced power compared with ordinary operation. It should be noted that the innovative method may be applied by either the first control unit 200 or the second control 210 or by both the first control unit 200 and the second control unit 210.

According to the embodiment schematically illustrated in Figure 2, the first control unit 200 is adapted to controlling operation of the pump 230 intermittently and at reduced power compared with ordinary operation in such a way that any amount of electrical energy which may be needed for cooling the dosing unit 250 to at least one critical temperature as regards safety is smaller than in the state of the art.

According to this version, a compressed air source 260 is provided to supply compressed air to the dosing unit 250 via a line 261. The dosing unit 250 is adapted to using said compressed air supply to divide more finely the fuel being dosed. The compressed air may also be used for at least partly causing the dosing unit to dose said fuel into the exhaust duct. The compressed air may also be used to blow out of, for example, the dosing unit 250 any fuel which may be present therein. This may be effected during operation of the engine 150 or after the engine 150 has been switched off.

According to a version, the container 205 may be the vehicle's fuel tank, in which case portions of the vehicle's existing fuel system are utilised according to the present invention. According to another example, the container may be a separate container, i.e. not the same container as the vehicle's fuel tank.

According to a version, the dosing unit 250 is situated immediately adjacent to an exhaust duct of the HC dosing system. According to another example, the dosing unit 250 is provided with a passive nozzle running through said exhaust duct to dose said fuel directly into the exhaust duct.

According to a version, said pump 230 is the same pump as normally generates fuel pressure for an injection system of the engine 150. According to another example, said pump 230 is a separate pump, i.e. not the same pump as normally generates the fuel pressure for the injection system.

According to an example, a precatalyst and/or oxidation catalyst are/is fitted in series with, and upstream of, the particle filter.

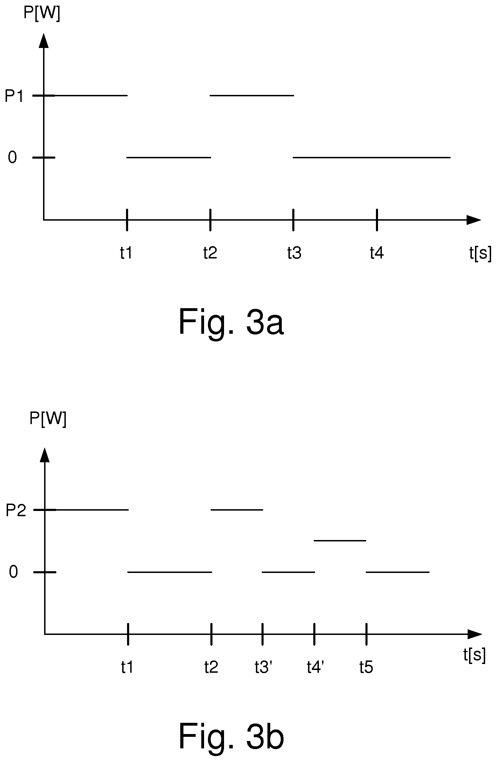

Figure 3a is a schematic diagram of an operating power P of the feed device as a function of time t, according to an embodiment of the invention.

It illustrates schematically how the feed device 230 may be run on the basis of a first predetermined interval configuration. According to the first interval configuration, the feed device 230 continues, where a need for cooling of the dosing unit 250 is determined, e.g. after cessation of the exhaust flow, to be run at an ordinary operating power P1 until a first time t1. Between the first time t1 and a second time the operating power P of the feed device 230 is zero (0) and the feed device is therefore off or idling. After the second time t2 the feed device 230 is run at an ordinary operating power P1 until a third time t3. After the third time t3, the operating power P of the feed device 230 is zero (0) and the feed device is therefore off or idling. At a fourth time it is found that predetermined criteria are fulfilled and the feed device therefore continues to be off. At the fourth time t4 it is found that it will not be possible for a prevailing temperature of the dosing unit 250 to be increased by rewarming effects to too high a temperature at which there would be risk of its functional degradation.

According to the first predetermined interval configuration, the period t1-t2 and the period t2-t3 are of substantially equal duration.

It should be noted that various periods for operation and non-operation of the feed device in a predetermined interval configuration may differ in length according to a version. It should also be noted that an interval configuration may also have any suitable number of periods of operation and non-operation of the feed device. According to a version, the periods pertaining to operation of the feed device (e.g. the period t2-t3) are within a range of 30 to 90 seconds. According to a version, the periods relating to operation of the feed device (e.g. the period t2-t3) are within a range of 1 to 5 minutes. According to a version, the periods relating to operation of the feed device (e.g. the period t2-t3) are shorter than one (1) minute. According to a version, the periods relating to operation of the feed device (e.g. the period t2-t3) are longer than five (5) minutes.

According to a version, the predetermined interval configuration has a length of the order of 30 minutes. The predetermined interval configuration may be shorter than 30 minutes. The predetermined interval configuration may be longer than 30 minutes.

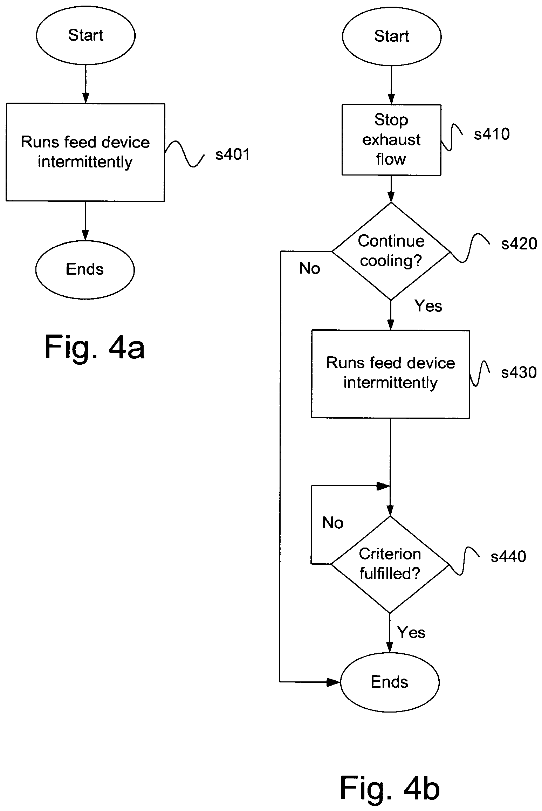

A version of the invention determines at any desired times in an interval configuration whether a predetermined criterion is fulfilled, in which case switching off of the feed device 230 may be effected on that basis. Said predetermined criterion is described in more detail with reference to Figure 4b below.

Figure 3b is a schematic diagram of an operating power of the feed device as a function of time, according to an embodiment of the invention.

It illustrates schematically how the feed device 230 may be run on the basis of a second predetermined interval configuration. According to the second interval configuration, the feed device 230 continues, where a need for cooling of the dosing unit 250 is determined, e.g. after cessation of the exhaust flow, to be run at a reduced operating power P2, compared with ordinary operation, until a first time t1. Between the first time t1 and a second time the operating power P of the feed device 230 is zero (0) and the feed device is therefore off or idling. After the second time t2 the feed device 230 is run at operating power P2 until a third time t3'. The period t2-t3' is shorter than the period t2-t3 described with reference to Figure 3a. After the third time t3', the operating power P of the feed device 230 is zero (0) until a fourth time t4' and the feed device is therefore off or idling. The period t3'-t4' is shorter than the period t3-t4 described with reference to Figure 3a. After the fourth time t4' the feed device 230 is run at further reduced operating power until a fifth time t5. At the fifth time t5 it is determined that predetermined criteria are fulfilled and the feed device then continues to be off, whereupon the operating power becomes zero (0). At the fifth time t5 it is determined that it will not be possible for a prevailing temperature of the dosing unit 250 to be increased by rewarming effects to too high a temperature at which there would be risk of its functional degradation.

Figure 4a is a schematic flowchart of a method for cooling a dosing unit pertaining to HC dosing systems for exhaust cleaning which comprise the dosing unit for fuel and a feed device to supply said fuel for cooling, according to an embodiment of the invention. The method comprises a first step s401. Method step s401 comprises the steps of cooling a fuel dosing unit by means of fuel supplied to the dosing unit, and of intermittently, in mutually successive periods of running at certain operating powers and of zero operating power, running said fuel feed device at reduced power compared with ordinary operation. The method ends after step s401.

Figure 4b is a schematic flowchart of a method for cooling a dosing unit pertaining to HC dosing systems for exhaust cleaning which comprise the dosing unit for fuel and a feed device to supply said fuel for cooling, according to an embodiment of the invention.

The method comprises a first step s410. Method step s410 comprises the step of shutting off an exhaust flow from a combustion engine of the vehicle 100. At this stage, the dosing unit 250 is cooled in an ordinary way, i.e. at an operating power of the pump 230 which is needed to maintain the same cooling flow for the dosing unit as during ordinary operation. Shutting off the exhaust flow is effected by switching off the engine of the vehicle 100. It should be noted that the first method step s410 is an optional step. The invention is applicable, according to an aspect, to HC dosing systems in which the engine 150 is in operation and therefore provides the HC dosing system with an exhaust flow. Step s410 is followed by a step s420.

Method step s420 comprises the step of evaluating whether there is a continuing need to cool the dosing unit by means of a flow of the fuel in the HC dosing system. The step of deciding whether there is a need to continue said cooling may be based on various parameters. According to an example, deciding whether there is a continuing need for cooling is based on the signals from the temperature sensor 220 which contain information about a prevailing temperature of at least one component of the HC dosing system or the subsystem 299 of the vehicle 100. If there is no continuing need for cooling, the method ends. If there is a continuing need for cooling, a subsequent step s430 is performed.

Method step s430 comprises the step of influencing the operation of the pump 230 in such a way that it is run intermittently. According to a version, the pump 230 is run intermittently with a predetermined interval configuration. According to a version, the pump 230 is run intermittently at an operating power corresponding to ordinary operation. According to a version, the pump 230 is run intermittently at a reduced operating power compared with an operating power employed for maintaining a cooling flow of the dosing unit 250 during ordinary operation. Step s430 is followed by a step s440.

Method step s440 comprises the step of deciding whether a predetermined criterion is fulfilled. The predetermined criterion may be any suitable criterion. Said criterion may be associated with a predetermined interval configuration. Said criterion may be associated with a measured temperature of at least one portion of said HC dosing system. Said criterion may be associated with rewarming effects of at least one portion of said HC dosing system. The predetermined criterion may thus be fulfilled if the operating power of the pump 230 has been controlled in accordance with the predetermined interval configuration, in which case it may be assumed that the dosing unit 250 has reached a desired temperature at which it needs no further cooling. If a predetermined temperature of at least one portion of the HC dosing system has been reached, after the pump 230 has been run intermittently in a certain way, it may be assumed that the dosing unit 250 has reached a desired temperature at which it needs no further cooling. If it is decided at step s440 that the predetermined criterion is fulfilled, the method ends. If it is decided at step s440 that the predetermined criterion is not fulfilled, the pump 230 continues to run intermittently, possibly also at reduced power compared with ordinary operation, and step s440 is performed again. The method ends after step s440.

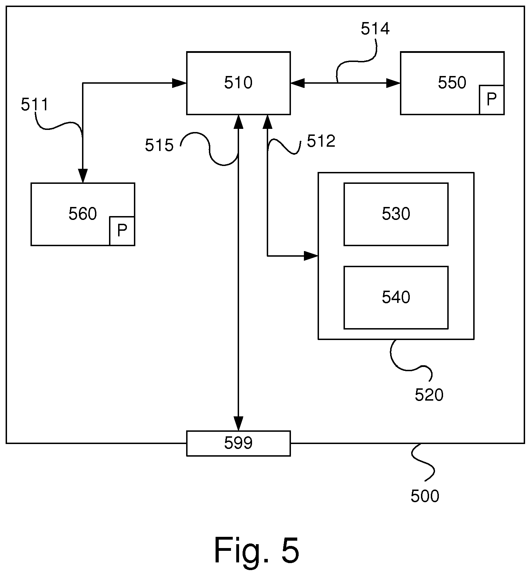

Figure 5 is a diagram of a version of a device 500. The control units 200 and 210 described with reference to Figure 2 may in a version comprise the device 500. The device 500 comprises a non-volatile memory 520, a data processing unit 510 and a read/write memory 550. The non-volatile memory 520 has a first memory element 530 in which a computer programme, e.g. an operating system, is stored for controlling the function of the device 500. The device 500 further comprises a bus controller, a serial communication port, I/O means, an A/D converter, a time and date input and transfer unit, an event counter and an interruption controller (not depicted). The non-volatile memory 520 has also a second memory element 540.

A proposed computer programme P comprises routines for, e.g. after cessation of exhaust flow, cooling the fuel dosing unit by means of fuel supplied to it, and for intermittently, in mutually successive periods of running at certain operating powers and of zero operating power, running a fuel feed device at reduced power compared with ordinary operation, according to the innovative method. The programme P may be stored in an executable form or in a compressed form in a memory 560 and/or in a read/write memory 550.

Where the data processing unit 510 is described as performing a certain function, it means that the data processing unit 510 effects a certain part of the programme stored in the memory 560, or a certain part of the programme stored in the read/write memory 550.

The data processing device 510 can communicate with a data port 599 via a data bus 515. The non-volatile memory 520 is intended for communication with the data processing unit 510 via a data bus 512. The separate memory 560 is intended to communicate with the data processing unit 510 via a data bus 511. The read/write memory 550 is adapted to communicating with the data processing unit 510 via a data bus 514. The data port 599 may for example have the links 290, 291, 292 and 293 connected to it (see Figure 2).

When data are received on the data port 599, they are temporarily stored in the second memory element 540. When input data received have been temporarily stored, the data processing unit 510 is prepared to effect code execution as described above. According to a version, signals received on the data port 599 contain information about a prevailing temperature of at least one portion of the HC dosing system. The signals received on the data port 599 may be used by the device 500 to run the pump 230 intermittently according to an aspect of the invention. The signals received on the data port 599 may used by the device 500 to run the pump 230 intermittently with a predetermined interval configuration, according to an aspect of the invention. The signals received on the data port 599 may be used by the device 500 to run the pump 230 intermittently at reduced operating power compared with ordinary operation and, where applicable, with a predetermined interval configuration, according to an aspect of the invention.

Parts of the methods herein described may be effected by the device 500 by means of the data processing unit 510 which runs the programme stored in the memory 560 or the read/write memory 550. When the device 500 runs the programme, methods herein described are executed.

The foregoing description of the preferred embodiments of the present invention is provided for illustrative and descriptive purposes. It is not intended to be exhaustive or to restrict the invention to the variants described. Many modifications and variants will obviously be apparent to one skilled in the art. The embodiments have been chosen and described in order best to explain the principles of the invention and its practical applications and hence make it possible for specialists to understand the invention for various embodiments and with the various modifications appropriate to the intended use.

## Claims

1. A method for cooling a dosing unit (250) pertaining to HC dosing systems for exhaust cleaning which comprise the dosing unit (250) for fuel and a feed device (230) to supply said fuel for cooling, whereby said feed device (230) is arranged to pump reducing agent from a container (205) via a first line (271), and via a second line (272) supply said fuel to said dosing unit (250), and where a third line (273) is arranged between said dosing unit (250) and said container (205), whereby said third line is adapted to leading back a certain amount of the fuel fed to the dosing unit (250) to said container (205), comprising the step of
- cooling said fuel dosing unit (250) by means of said fuel supplied to said dosing unit (250), whereby, at ordinary operation a return flow from said dosing unit (250) to said container (205) is essentially constant, **characterised by** the step of
- after cessation of exhaust flow, intermittently, in mutually successive respective periods of running at certain operating powers and of zero operating power, running said fuel feed device (230) at reduced power compared with ordinary operation, whereby a lower pressure towards said reducing agent dosing unit (250) compared with ordinary operation is achieved.

2. A method according to claim 1, whereby the feed device (230) is run intermittently with a predetermined interval configuration.

3. A method according to claim 2, whereby said predetermined interval configuration entails catering for rewarming effects of said dosing unit (250).

4. A method according to any one of the foregoing claims, whereby operation of the feed device is activated on the basis of a measured temperature of at least one portion of said HC dosing system.

5. A method according to any one of the foregoing claims, whereby operation of the feed device (230) results in cooling of said dosing unit (250) to a temperature which is below a predetermined limit value.

6. A method according to any one of the foregoing claims, in which said fuel is diesel fuel or some other hydrocarbon-based fuel.

7. A method according to any one of the foregoing claims, whereby the feed device (230) comprises a feed device adapted to supplying fuel to an injection system of an engine (150), or is a separate feed device (230).

8. A method according to any one of the foregoing claims, comprising the step of
- powering said dosing unit (250) by means of a compressed air source (260).

9. An HC dosing system for exhaust cleaning which comprises a coolable dosing unit (250) for fuel and a feed device (230) to supply said fuel, whereby said feed device (230) is arranged to pump fuel from a container (205) via a first line (271), and via a second line (272) supply said reducing agent to said dosing unit (250), and where a third line (273) is arranged between said dosing unit (250) and said container (205), whereby said third line is adapted to leading back a certain amount of the fuel fed to the dosing unit (250) to said container (205), whereby said dosing unit (250) is cooled by said fuel intended to be supplied to said dosing unit, whereby at ordinary operation a return flow from said dosing unit (250) to said container (205) is essentially constant,
**characterised by**
- means (200; 210; 500) for, after cessation of an exhaust flow, intermittently, in mutually successive respective periods of running at certain operating powers and of zero operating power, running said feed device (230) for said coolant fuel at reduced power compared with ordinary operation, whereby a lower pressure towards said reducing agent dosing unit (250) compared with ordinary operation is achieved..

10. An HC dosing system according to claim 9, in which the feed device (230) is adapted to being run intermittently with a predetermined interval configuration.

11. An HC dosing system according to claim 10, in which said predetermined interval configuration entails catering for rewarming effects of said dosing unit.

12. An HC dosing system according to any one of claims 9-11, in which operation of the feed device (230) is activated on the basis of a measured temperature of at least one portion of said HC dosing system.

13. An HC dosing system according to any one of claims 9-12, in which the feed device is adapted during operation to effecting cooling of said dosing unit (250) to a temperature which is below a predetermined limit value.

14. An HC dosing system according to any one of claims 9-13, in which said fuel is diesel fuel or some other hydrocarbon-based fuel.

15. An HC dosing system according to any one of claims 9-14, in which the feed device (230) comprises a feed device adapted to supplying fuel to an injection system of an engine (150), or the feed device (230) is a separate feed device (230).

16. An HC dosing system according to any one of claims 9-15, comprising compressed air means (260) adapted to powering said dosing unit (250).

17. An HC dosing system according to any one of claims 9-16, which system comprises a DPF system.

18. A motor vehicle (100; 110) comprising an HC dosing system according to any one of claims 9-17.

19. A motor vehicle (100; 110) according to claim 17, which vehicle is any from among truck, bus or passenger car.

20. A computer programme (P) pertaining to HC dosing systems for exhaust cleaning which comprise a dosing unit (250) for fuel and a feed device (230) for said fuel, which programme (P) contains programme code for causing an electronic control unit (200; 500) or another computer (210; 500) connected to the electronic control unit (200; 500) to perform steps according to any of claims 1-8.

21. A computer programme product containing a programme code stored on a computer-readable medium for performing method steps according to any of claims 1-8 when said programme code is run on an electronic control unit (200; 500) or another computer (210; 500) connected to the electronic control unit (200; 500)

## Patentansprüche

1. Verfahren zur Kühlung einer Dosiereinheit (250) eines HC-Dosiersystems zur Abgasreinigung, das eine Dosiereinheit (250) für Kraftstoff und eine Zufuhrvorrichtung (230) zum Zuführen des Kraftstoffs zum Kühlen aufweist, wobei die Zufuhrvorrichtung (230) so angeordnet ist, dass sie ein Reduktionsmittel aus einem Behälter (205) über eine erste Leitung (271) pumpt und über eine zweite Leitung (272) den Kraftstoff der Dosiereinheit (250) zuführt, und wobei eine dritte Leitung (273) zwischen der Dosiereinheit (250) und dem Behälter (205) angeordnet ist, wobei die dritte Leitung dazu eingerichtet ist, eine bestimmte Menge des der Dosiereinheit (250) zugeführten Kraftstoffs zum Behälter (205) zurückzuführen, das den Schritt aufweist:
- Kühlen der Kraftstoff-Dosiereinheit (250) mittels des der Dosiereinheit (250) zugeführten Kraftstoffs, wobei der Rücklauf von der Dosiereinheit (250) zum Behälter (205) im Normalbetrieb im Wesentlichen konstant ist,
**gekennzeichnet durch** den Schritt
- nach Beendigung eines Abgasstroms intermittierendes Betreiben der Zufuhrvorrichtung (230) in wechselseitig aufeinanderfolgenden entsprechenden Betriebsperioden bei bestimmten Betriebsleistungen und bei Betriebsleistung null mit verringerter Leistung im Vergleich zum Normalbetrieb, wodurch einer niedrigerer Druck auf die Reduktionsmittel-Dosiereinheit (250) erreicht wird.

2. Verfahren nach Anspruch 1, wobei die Zufuhrvorrichtung (230) intermittierend mit einem vorgegebenen Intervall betrieben wird.

3. Verfahren nach Anspruch 2, wobei die Konfiguration mit dem vorgegebenen Intervall Aufwärmeffekte der Dosiereinheit (250) mit sich bringt.

4. Verfahren nach einem der vorigen Ansprüche, wobei der Betrieb der Zufuhrvorrichtung auf Basis einer gemessenen Temperatur mindestens eines Abschnitts des HC-Dosiersystems aktiviert wird.

5. Verfahren nach einem der vorigen Ansprüche, wobei der Betrieb der Zufuhrvorrichtung (230) in der Abkühlung der Dosiereinheit (250) auf eine Temperatur resultiert, die unter einem vorgegebenen Grenzwert liegt.

6. Verfahren nach einem der vorigen Ansprüche, bei dem der Kraftstoff Dieselkraftstoff oder ein anderer Kraftstoff auf Kohlenwasserstoffbasis ist.

7. Verfahren nach einem der vorigen Ansprüche, wobei die Zufuhrvorrichtung (230) eine Zufuhrvorrichtung aufweist, die zur Zufuhr von Kraftstoff an ein Einspritzsystem eines Verbrennungsmotors (150) eingerichtet ist, oder die eine getrennte Zufuhrvorrichtung (230) ist.

8. Verfahren nach einem der vorigen Ansprüche, das den Schritt des
- Aktivierens der Dosiereinheit (250) mittels einer Druckluftquelle (260) aufweist.

9. HC-Dosiersystem zur Abgasreinigung, das eine kühlbare Dosiereinheit (250) für Kraftstoff und eine Zufuhrvorrichtung (230) für den Kraftstoff aufweist, wobei die Zufuhrvorrichtung (230) so angeordnet ist, dass sie Kraftstoff aus einem Behälter (205) über eine erste Leitung (271) pumpt, und über eine zweite Leitung (272) das Reduktionsmittel der Dosiereinheit (250) zuführt und eine dritte Leitung (273) zwischen der Dosiereinheit (250) und dem Behälter (205) angeordnet ist, wobei die dritte Leitung dazu eingerichtet ist, eine bestimmte Menge des der Dosiereinheit (250) zugeführten Kraftstoffs zum Behälter (205) zurückzuführen, wobei die Dosiereinheit (250) durch den Kraftstoff gekühlt wird, der der Dosiereinheit zugeführt werden soll, wobei der Rücklauf von der Dosiereinheit (250) zum Behälter (205) im Normalbetrieb im Wesentlichen konstant ist,
**gekennzeichnet durch**
- Mittel (200; 210; 400) zum intermittierenden Betreiben der Zufuhrvorrichtung (230) nach Beendigung eines Abgasstroms in wechselseitig aufeinanderfolgenden entsprechenden Betriebsperioden bei bestimmten Betriebsleistungen und bei Betriebsleistung null mit verringerter Leistung im Vergleich zum Normalbetrieb, wodurch einer niedrigerer Druck auf die Reduktionsmittel-Dosiereinheit (250) erreicht wird.

10. HC-Dosiersystem nach Anspruch 9, wobei die Zufuhrvorrichtung (230) zum intermittierenden Betrieb mit einer Konfiguration mit einem vorgegebenen Intervall eingerichtet ist.

11. HC-Dosiersystem nach Anspruch 10, wobei die Konfiguration mit einem vorgegebenen Intervall Aufwärmeffekte der Dosiereinheit mit sich bringt.

12. HC-Dosiersystem nach einem der Ansprüche 9 bis 11, wobei der Betrieb der Zufuhrvorrichtung auf Basis einer gemessenen Temperatur mindestens eines Abschnitts des HC-Dosiersystems aktiviert wird.

13. HC-Dosiersystem nach einem der Ansprüche 9 bis 12, wobei die Zufuhrvorrichtung dazu eingerichtet ist, während des Betriebs die Abkühlung der Dosiereinheit (250) auf eine Temperatur unter einem vorgegebenen Grenzwert herbeizuführen.

14. HC-Dosiersystem nach einem der Ansprüche 9 bis 13, bei dem der Kraftstoff Dieselkraftstoff oder ein anderer Kraftstoff auf Kohlenwasserstoffbasis ist.

15. HC-Dosiersystem nach einem der Ansprüche 9 bis 14, bei dem die Zufuhrvorrichtung (230) eine Zufuhrvorrichtung aufweist, die zur Zufuhr von Kraftstoff an ein Einspritzsystem des Verbrennungsmotors (150) eingerichtet ist, oder die eine getrennte Zufuhrvorrichtung (230) ist.

16. HC-Dosiersystem nach einem der Ansprüche 9 bis 15, das ein Druckluftmittel aufweist, das zum Aktivieren der Dosiereinheit (250) eingerichtet ist.

17. HC-Dosiersystem nach einem der Ansprüche 9 bis 16, wobei das System ein DPF-System aufweist.

18. Kraftfahrzeug (100; 110), das ein HC-Dosiersystem nach einem der Ansprüche 9 bis 17 aufweist.

19. Kraftfahrzeug (100; 110) nach Anspruch 17, wobei das Kraftfahrzeug entweder ein Lastkraftwagen, ein Bus oder ein Personenkraftwagen ist.

20. Computerprogramm (P) für ein HC-Dosiersystem zur Abgasreinigung, das eine Dosiereinheit (250) für Kraftstoff und eine Zufuhrvorrichtung (230) für den Kraftstoff aufweist, wobei das Programm (P) einen Programmcode enthält, um eine elektronische Steuereinheit (200; 500) oder einen anderen mit der elektronischen Steuereinheit (200; 400) verbundenen Computer (210; 500) zu veranlassen, die Schritte nach einem der Ansprüche 1 bis 8 auszuführen.

21. Computerprogrammprodukt mit einem Programmcode, der zur Ausführung der Schritte nach einem der Ansprüche 1 bis 8 auf einem computerlesbaren Medium gespeichert ist, wenn der Programmcode auf einer elektronischen Steuereinheit (200; 500) oder einem anderen mit der elektronischen Steuereinheit (200; 400) verbundenen Computer (210; 500) ausgeführt wird.

## Revendications

1. Procédé pour refroidir une unité de dosage (250) appartenant aux systèmes de dosage de HC pour un nettoyage d'échappement qui comprennent l'unité de dosage (250) pour du carburant et un dispositif d'alimentation (230) pour délivrer ledit carburant pour le refroidissement, grâce auquel ledit dispositif d'alimentation (230) est agencé de façon à pomper un agent réducteur à partir d'un récipient (205) par l'intermédiaire d'une première ligne (271), et, par l'intermédiaire d'une deuxième ligne (272), à délivrer ledit carburant à ladite unité de dosage (250), et dans lequel une troisième ligne (273) est disposée entre ladite unité de dosage (250) et ledit récipient (205), grâce à quoi ladite troisième ligne est adaptée de façon à renvoyer une certaine quantité du carburant délivré à l'unité de dosage (250) vers ledit récipient (205), comprenant l'étape consistant à :
- refroidir ladite unité de dosage de carburant (250) à l'aide dudit carburant délivré à ladite unité de dosage (250), grâce à quoi, lors d'un fonctionnement ordinaire, un écoulement de retour à partir de ladite unité de dosage (250) vers ledit récipient (205) est essentiellement constant,
**caractérisé par** l'étape consistant à :
- après l'interruption de l'écoulement d'échappement, par intermittence, dans des périodes respectives mutuellement successives de fonctionnement à certaines puissances de fonctionnement et de puissance de fonctionnement nulle, faire fonctionner ledit dispositif d'alimentation en carburant (230) à puissance réduite par rapport à un fonctionnement ordinaire, grâce à quoi une pression plus basse vers ladite unité de dosage d'agent réducteur (250), par rapport à celle d'un fonctionnement ordinaire, est atteinte.

2. Procédé selon la revendication 1, grâce auquel le dispositif d'alimentation (230) est actionné par intermittence avec une configuration d'intervalle prédéterminée.

3. Procédé selon la revendication 2, grâce auquel ladite configuration d'intervalle prédéterminée met en oeuvre une alimentation pour des effets de réchauffage de ladite unité de dosage (250).

4. Procédé selon l'une quelconque des revendications précédentes, grâce auquel le fonctionnement du dispositif d'alimentation est activé en fonction d'une température mesurée d'au moins une partie dudit système de dosage de HC.

5. Procédé selon l'une quelconque des revendications précédentes, grâce auquel le fonctionnement du dispositif d'alimentation (230) produit en résultat un refroidissement de ladite unité de dosage (250) à une température qui est inférieure à une valeur limite prédéterminée.

6. Procédé selon l'une quelconque des revendications précédentes, dans lequel ledit carburant est du carburant diesel ou un quelconque autre carburant à base d'hydrocarbures.

7. Procédé selon l'une quelconque des revendications précédentes, grâce auquel le dispositif d'alimentation (230) comprend un dispositif d'alimentation adapté de façon à délivrer du carburant à un système d'injection d'un moteur (150), ou est un dispositif d'alimentation séparé (230).

8. Procédé selon l'une quelconque des revendications précédentes, comprenant l'étape consistant à :
- actionner ladite unité de dosage (250) à l'aide d'une source d'air comprimé (260).

9. Système de dosage de HC pour nettoyage d'échappement, qui comprend une unité de dosage pouvant être refroidie (250) pour du carburant et un dispositif d'alimentation (230) pour délivrer ledit carburant, grâce à quoi ledit dispositif d'alimentation (230) est agencé de façon à pomper du carburant à partir d'un récipient (205) par l'intermédiaire d'une première ligne (271), et, par l'intermédiaire d'une deuxième ligne (272), à délivrer ledit agent réducteur à ladite unité de dosage (250), et dans lequel une troisième ligne (273) est disposée entre ladite unité de dosage (250) et ledit récipient (205), grâce à quoi ladite troisième ligne est adaptée de façon à renvoyer une certaine quantité du carburant délivré à l'unité de dosage (250) vers ledit récipient (205), grâce à quoi ladite unité de dosage (250) est refroidie par ledit carburant dont il est prévu qu'il soit délivré à ladite unité de dosage, grâce à quoi, dans un fonctionnement ordinaire, un écoulement de retour de ladite unité de dosage (250) audit récipient (205) est essentiellement constant,
**caractérisé par** :
- des moyens (200 ; 210 ; 500) pour, après l'interruption d'un écoulement d'échappement, par intermittence, dans des périodes respectives mutuellement successives de fonctionnement à certaines puissances de fonctionnement et de puissance de fonctionnement nulle, faire fonctionner ledit dispositif d'alimentation (230) pour ledit carburant de refroidissement à puissance réduite par rapport à un fonctionnement ordinaire, grâce à quoi une pression plus basse vers ladite unité de dosage d'agent réducteur (250), par rapport à celle d'un fonctionnement ordinaire, est atteinte.

10. Système de dosage de HC selon la revendication 9, dans lequel le dispositif d'alimentation (230) est adapté de façon à être actionné par intermittence avec une configuration d'intervalle prédéterminée.

11. Système de dosage de HC selon la revendication 10, dans lequel ladite configuration d'intervalle prédéterminée met en oeuvre une alimentation pour des effets de réchauffage de ladite unité de dosage.

12. Système de dosage de HC selon l'une quelconque des revendications 9 à 11, dans lequel le fonctionnement du dispositif d'alimentation (230) est activé en fonction d'une température mesurée d'au moins une partie dudit système de dosage de HC.

13. Système de dosage de HC selon l'une quelconque des revendications 9 à 12, dans lequel le dispositif d'alimentation est adapté, durant le fonctionnement, de façon à effectuer un refroidissement de ladite unité de dosage (250) à une température qui est inférieure à une valeur limite prédéterminée.

14. Système de dosage de HC selon l'une quelconque des revendications 9 à 13, dans lequel ledit carburant est du carburant diesel ou un quelconque autre carburant à base d'hydrocarbures.

15. Système de dosage de HC selon l'une quelconque des revendications 9 à 14, dans lequel le dispositif d'alimentation (230) comprend un dispositif d'alimentation adapté de façon à délivrer du carburant à un système d'injection d'un moteur (150), ou le dispositif d'alimentation (230) est un dispositif d'alimentation séparé (230).

16. Système de dosage de HC selon l'une quelconque des revendications 9 à 15, comprenant des moyens à air comprimé (260) adaptés de façon à actionner ladite unité de dosage (250).

17. Système de dosage de HC selon l'une quelconque des revendications 9 à 16, ce système comprenant un système de filtre à particules diesel.

18. Véhicule à moteur (100 ; 110) comprenant un système de dosage de HC selon l'une quelconque des revendications 9 à 17.

19. Véhicule à moteur (100 ; 110) selon la revendication 17, ce véhicule étant l'un quelconque parmi un camion, un autobus ou une voiture pour passagers.

20. Programme informatique (P) concernant des systèmes de dosage de HC pour un nettoyage d'échappement qui comprennent une unité de dosage (250) pour du carburant et un dispositif d'alimentation (230) pour ledit carburant, ce programme (P) contenant un code de programme pour amener une unité de commande électronique (200 ; 500) ou un autre ordinateur (210 ; 500) connecté à l'unité de commande électronique (200 ; 500) à exécuter des étapes selon l'une quelconque des revendications 1 à 8.

21. Produit de programme informatique contenant un code de programme mémorisé sur un support lisible sur ordinateur pour exécuter des étapes de procédé selon l'une quelconque des revendications 1 à 8 lorsque ledit code de programme est exécuté sur une unité de commande électronique (200 ; 500) ou un autre ordinateur (210 ; 500) connecté à l'unité de commande électronique (200 ; 500).
